**Europäisches Patentamt**

**European Patent Office**

**Office européen des brevets**

(19)

(11) Veröffentlichungsnummer: **0 363 693**
**A1**

(12)                     **EUROPÄISCHE PATENTANMELDUNG**

(21) Anmeldenummer: **89117345.2**

(22) Anmeldetag: **20.09.89**

(51) Int. Cl.⁵: **B65D 75/66**

(30) Priorität: **05.10.88 DE 3833939**

(43) Veröffentlichungstag der Anmeldung:
**18.04.90 Patentblatt 90/16**

(84) Benannte Vertragsstaaten:
**AT BE CH DE ES FR GB GR IT LI LU NL SE**

(71) Anmelder: **JACOBS SUCHARD AG**
**Seefeldquai 17**
**CH-8023 Zürich(CH)**

(72) Erfinder: **Heilmann, Wolfgang, Dr.**
**Hollerlander Weg 50**
**D-2800 Bremen 33(DE)**
Erfinder: **Maurer, Andreas**
**Hollerstrasse 10**
**D-2800 Bremen 1(DE)**

(74) Vertreter: **Bolte, Erich, Dipl.-Ing. et al**
**c/o Meissner, Bolte & Partner Patentanwälte**
**Hollerallee 73**
**D-2800 Bremen 1(DE)**

(54) **Verpackung aus Verbundfolie sowie Verfahren zum Herstellen derselben.**

(57) Verpackungen aus einer mehrschichtigen Folie dienen vielfach zur Aufnahme von aromaempfindlichen Verbrauchsgütern, insbesondere werden derartige Verpackungen zur Aufnahme von gemahlenem Röstkaffee verwendet. Die Verpackung besteht aus einem Kaffeeblock (10) und beiderseits überstehenden Flossenfaltungen. Im Bereich der oberen Flossenfaltung sind Öffnungsmittel vorgesehen, um die Verpackung ohne Werkzeug öffnen zu können.

Die Öffnungsmittel umfassen mindestens einen im wesentlichen linienförmigen Öffnungsabschnitt (14), in welchem die Verbundfolie relativ zu den an diesen Abschnitt angrenzenden Flächenbereichen zum gerichteten Öffnen mindestens geschwächt ist.

Fig. 1

## Verpackung aus Verbundfolie sowie Verfahren zum Herstellen derselben

Die Erfindung betrifft eine Verpackung aus mehrschichtiger Verbundfolie, die mittels Längsnaht zu einem Folienschlauch geformt ist und die mindestens eine (obere) quergerichtete Verschlußnaht aufweist, wobei Öffnungsmittel benachbart zur Verschlußnaht angeordnet sind.

Verpackungen aus Verbundfolien bzw. beschichteten Folien können in verschiedenen Bereichen der Verpackungstechnik eingesetzt werden. Vorwiegend bestehen diese Verpackungen aus einem Schlauchabschnitt der Verbundfolie mit Längsnaht und quergerichteten Verschlußnähten. Sie dienen zur Aufnahme von insbesondere Nahrungs- und Genußmitteln, Süßwaren, Schokolade und Röstkaffee. Die Verpackungen für ge mahlenen Röstkaffee sind überwiegend als Vakuum-Verpackung ausgebildet, zum Beispiel in der Ausführung gemäß DE-A-38 29 042.1.

Zum erleichterten Öffnen derartiger Folien-Verpackungen ist benachbart zur einen (oberen) Verschlußnaht eine Öffnungshilfe angebracht. Lösungen hierfür zeigt die DE-A-38 29 042.1.

Es ist Aufgabe der Erfindung, andere, weitere Öffnungshilfen für derartige Verpackungen vorzuschlagen. Diese sollen gemäß der der Erfindung zugrundeliegenden Aufgabe leicht zu handhaben sein, einen ungehinderten Zugang zum Inhalt der Verpackung gewähren, gleichwohl aber in geschlossenem Zustand die Dichtigkeit der Verpackung, auch in der Ausführung als Vakuum-Verpackung, gewährleisten.

Zur Lösung dieser Aufgabe ist die erfindungsgemäße Verpackung bzw. deren Öffnungshilfe dadurch gekennzeichnet, daß die Öffnungsmittel mindestens einen im wesentlichen linienförmigen Öffnungsabschnitt umfassen, in dessen Bereich die Verbundfolie relativ zu den an diesen Abschnitt angrenzenden Flächenbereichen zum gerichteten Öffnen geschwächt ist.

Die mehrschichtigen Verbundfolien, insbesondere für Vakuum-Verpackungen, sind von Haus aus nicht bzw. nur schwer reißfähig. Insbesondere ist es nicht möglich, eine geradlinige Reißkante beim Öffnen herzustellen. Durch die erfindungsgemäße Anordnung der Schwächungslinien in der Verbundfolie wird deren Dichtigkeit gewährleistet, andererseits aber eine örtliche Schwächung mit erleichterter Reißfähigkeit entlang der (geradlinigen) Kontur der Schwächungslinie gewährleistet.

Die Schwächungslinie und damit eine definierte Reißlinie der Verbundfolie kann erfindungsgemäß auch dadurch gewährleistet sein, daß die Öffnungshilfe aus Verstärkungsab schnitten bzw. Verstärkungsstreifen besteht, die innen oder vorzugsweise außen an der Folie angebracht sind, wobei der Riß entlang einer Seitenkante des Verstärkungsabschnitts erfolgt. Nach einem weiteren Vorschlag der Erfindung sind zwei streifenförmige Verstärkungsabschnitte vorgesehen, die über kleine, quergerichtete Materialbrücken miteinander verbunden sind. Es entsteht so zwischen den Verstärkungsabschnitten ein Spalt mit kleinen Unterbrechungen. Längs dieses Spalts erfolgt der Riß in der Verbundfolie beim Öffnen der Verpackung.

Die Materialschwächungen können auf verschiedene Weise hergestellt werden. Erfindungsgemäß wird eine derartige Nut bzw. Kerbe in der Verbundfolie durch einen Laserstrahl ($CO_2$-Laser) hergestellt, dessen Strahlung vom Kunststoff absorbiert wird und diesen aufheizt, von der innenliegenden Metall- bzw. Aluminiumschicht jedoch reflektiert wird. Durch die Absorption der Strahlung wird die Kunststoffschicht in einem sehr schmalen Bereich geschmolzen und zieht sich aufgrund der Oberflächenspannung der Schmelze zusammen, so daß nach dem Erstarren die Kerbe gebildet ist. Anstelle einer solchen Schwächung des Materials über eine Veränderung der Dimension (Dicke der Kunststoffschichten) ist es auch möglich, die Kunststoffschichten im Öffnungsbereich entlang einer Linie in ihrer inneren Struktur zu verändern. Dies kann zum Beispiel durch eine Veränderung des Polymerisationsgrades nach Art einer künstlichen Alterung, zum Beispiel durch Einwirkung härterer Strahlung, zum Beispiel durch einen UV-Laser geschehen. Weiterhin ist es möglich, diese eben beschriebenen Maßnahmen in Kombination durchzuführen. Als weitere Alternative zur Schwächung des Materials im Öffnungsabschnitt kann man dieses in einem linienförmigen Bereich recken, wobei sichergestellt sein muß, daß die Metallschicht geschlossen bleibt.

Alternativ kann die Energiezufuhr zum Laser so gesteuert werden, daß dieser nur teilweise in die Schichten der Ver bundfolie eindringt. Die Dichtigkeit derselben wird dadurch erhalten.

Die Aufreißhilfen der vorstehenden Art, insbesondere die Behandlung mittels Laser, werden vorzugsweise bereits bei der Herstellung der Folie, jedenfalls vor der Bildung von Zuschnitten für die Verpackungen hergestellt bzw. angebracht. Eine durchgehende Materialbahn der Verbundfolie, von der die Zuschnitte abgetrennt werden, ist demnach positionsgerecht mit den erfindungsgemäßen Aufreißhilfen versehen. Dadurch ist eine rationelle Anbringung der Aufreißhilfen möglich, insbesondere mit einem stationären Laser, an dem die Folienbahn vorbeigefördert wird.

Weitere Einzelheiten der Erfindung werden nachfolgend anhand eines Ausführungsbeispiels beschrieben. Es zeigt:

Fig. 1 eine perspektivische Darstellung einer gefüllten Verpackung gemäß einer ersten bevorzugten Ausführungsform;

Fig. 2 einen Schnitt entlang der Linie II-II aus Fig. 1;

Fig. 3 die perspektivische Ansicht einer gestaltungsmäßigen Alternative zur Ausführungsform gemäß Fig. 1;

Fig. 4 die Draufsicht auf eine Folienbahn zur Herstellung einer Verpackung nach Fig. 3;

Fig. 5a und 5b die Seitenansicht einer Verpackung gemäß einer zweiten Ausführungsform der Erfindung;

Fig. 6 die Draufsicht auf eine Folienbahn zur Herstellung der in Fig. 5b gezeigten Verpackung;

Fig. 7 eine vergrößerte Darstellung des in Fig. 6 mit VII bezeichneten Bereiches;

Fig. 8 einen Schnitt entlang der Linie VIII-VIII aus Fig. 7;

Fig. 9a und 9b eine Darstellung ähnlich der nach Fig. 5 einer weiteren bevorzugten Ausführungsform der Erfindung;

Fig. 10 und 11 Draufsichten auf Folienbahnen zur Herstellung der Verpackung nach Fig. 9a bzw. 9b;

Fig. 12 und 13 Schnitte entlang der Linien XII-XII bzw. XIII-XIII aus Fig. 9a bzw. Fig. 9b; und

Fig. 14a und 14b die Seitenansicht auf eine Packung gemäß einer weiteren bevorzugten Ausführungsform der Erfindung.

Die in den Zeichnungen dargestellten Ausführungsbeispiele von Aufreißhilfen sind bei verschiedenen Gestaltungen von Verpackungen aus Verbundfolien anwendbar. Diese Folien haben in der Regel einen grundsätzlichen Aufbau derart, daß aus einer Folienbahn ein Schlauch gebildet wird mit einer Längsnaht. Ein Schlauchabschnitt bildet die Verpackung mit an den Enden angeordneten Quernähten.

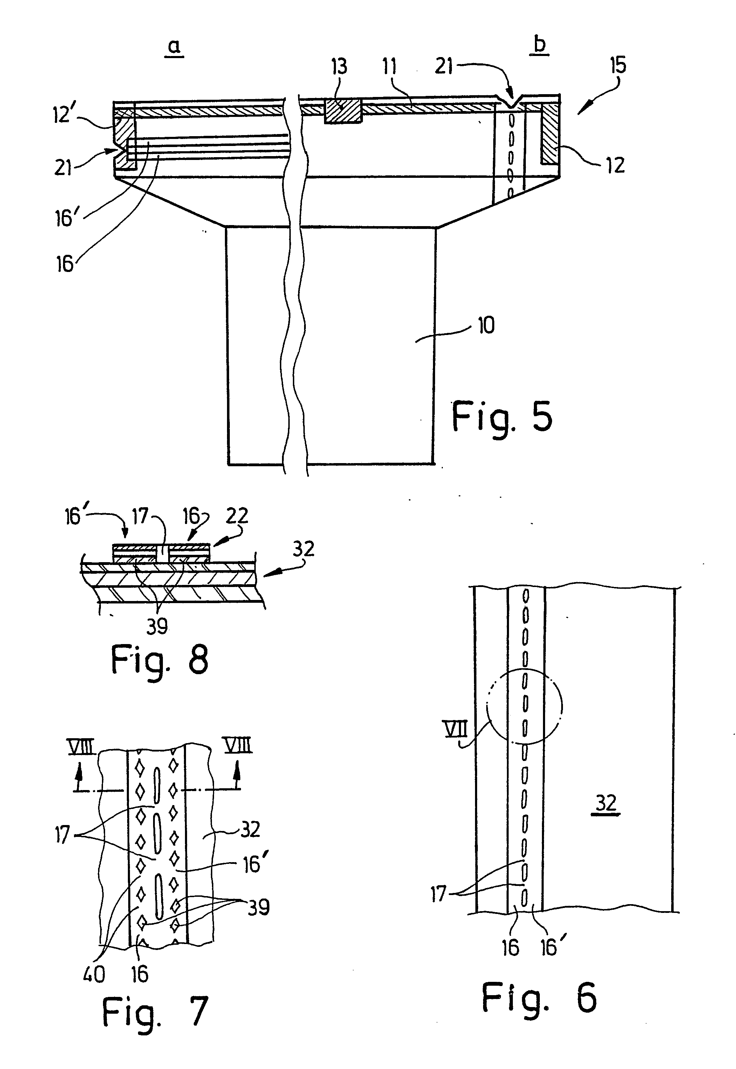

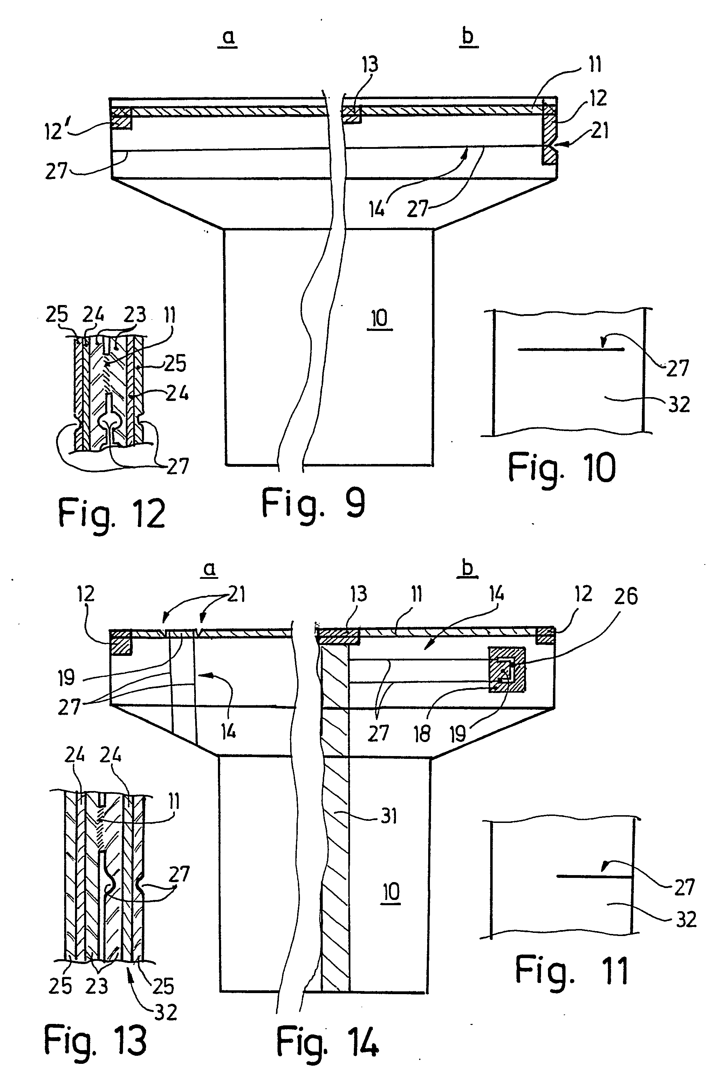

Die in den Zeichnungen dargestellten Beispiele von kompletten Verpackungen sind Vakuum-Verpackungen, insbesondere zur Aufnahme von gemahlenem Röstkaffee. Bei diesem Typ einer Folien-Verpackung wird innerhalb derselben durch die Evakuierung ein quaderförmiger Kaffeeblock 10 gebildet, der durch das Vakuum fest und formstabil bleibt. Das obere Ende der Verpackung ist durch eine quergerichtete Verschlußnaht 11 dicht verschlossen. Eine Längsnaht 31 kann entweder - wie in Fig. 14 gezeigt - mittig auf einer Packungsrückseite verlaufen oder an der Seite derselben (nicht gezeigt). Bei den in Fig. 5, 9 und 14 gezeigten bevorzugten Ausführungsformen werden zunächst seitliche Teilnähte 12, 12′ sowie eine dazwischenliegende Fixiernaht 13 angebracht, so daß die zwischen den seitlichen Teilnähten 12, 12′ zunächst entstehende, an sich leicht aufklappende Öffnung über die Fixiernaht 13 im zusammengeklappten Zustand gehalten wird. Während des Evakuierens kann jedoch durch die zwei Teilöffnungen die Luft abgesaugt werden. Danach wird die sich über die volle Breite erstreckende Verschlußnaht 11 hergestellt.

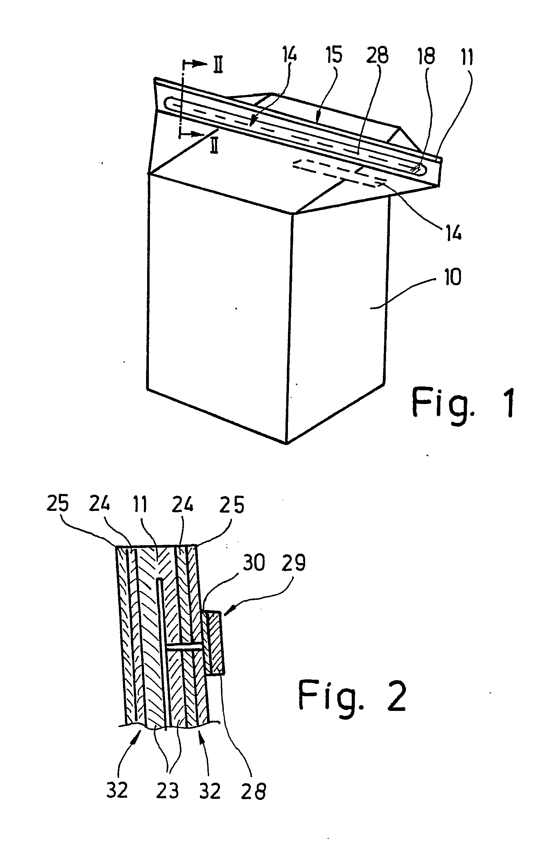

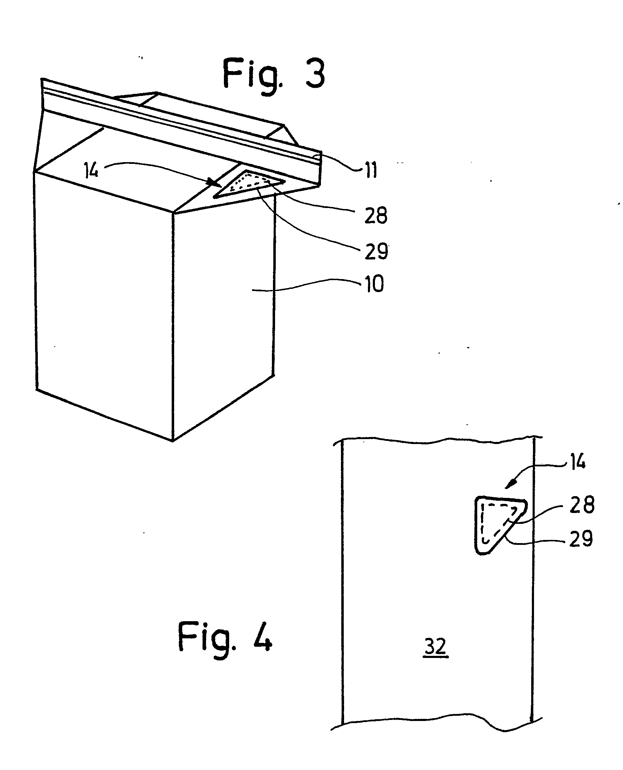

Zum Öffnen der Packung ist im Bereich zwischen der Verschlußnaht 11 und dem Kaffee-Block 10 ein Öffnungsabschnitt 14 vorgesehen. Dieser Öffnungsabschnitt 14 umfaßt bei der in den Figuren 1 bis 3 gezeigten Ausführungsform der Erfindung einen Schlitz 28 (siehe Fig. 2), der die eine der beiden im Bereich der Faltung aufeinanderliegenden Verbundfolien 32 vollständig durchtrennt. Der Schlitz 28 verläuft somit durch die außenliegenden Kunststoffschichten 23 und 25 und durch die dazwischenliegende Aluminiumschicht 24. Zum dichten Verschließen des Schlitzes 28 ist auf diesen ein Peel-Etikett 29 aufgeklebt, das mit seiner Haftschicht 30 fest auf der äußeren Kunststoffschicht 25 der Verbundfolie 32 haftet. Da der Innenraum der Verpackung, also auch der Raum zwischen den beiden innenliegenden Kunststoffschichten 23, zu einem gewissen Maß luftleer gepumpt ist, wird das Peel-Etikett 29 fest auf die Außenfläche der Verbundfolie 32 durch den von außen wirkenden Luftdruck aufgedrückt, so daß die Haftwirkung verstärkt wird. Bei der in Fig. 1 mit durchgezogenen Linien gezeigten Ausführungsform ist das Peel-Etikett im Bereich des Verschlußabschnittes 15 als schmaler Streifen parallel zur Verschlußnaht 11 über im wesentlichen die gesamte Breite des Verschlußabschnittes 15 vorgesehen. Bei der in Fig. 1 mit durchbrochenen Linien angedeuteten Ausführungsform der Erfindung ist der Öffnungsabschnitt 14 so weit unterhalb des Verschlußabschnittes 15 angebracht, daß er auf dem Kaffee-Block sich in den dreieckigen Faltlappen erstreckenden Abschnitt zu liegen kommt. Bei der in Fig. 3 gezeigten Ausführungsform der Erfindung umschreibt der Schnitt 28 eine im wesentlichen dreieckige Öffnung, die auf dem Faltlappen liegt. Vorzugsweise wird zur Herstellung einer solchen Packung eine in Fig. 4 gezeigte Bahn einer Verbundfolie 32 verwendet, die (bereits auf der Rolle) zumindest mit den Schnitten 28 in geeigneten Abständen versehen ist. Der Schnitt 28 kann zur Herstellung einer Packung nach Fig. 3 auch so geführt sein, daß der vom Schnitt 28 umschriebene Flächenabschnitt der Verbundfolie 32 mit der übrigen Bahn noch eine Verbindung hat, nach Abziehen oder gleichzeitig mit dem Abziehen des Peel-Etikettes 29 aber eine Ausschüttöffnung freigibt.

Bei der in den Figuren 5 bis 7 gezeigten weiteren bevorzugten Ausführungsform der Erfindung ist die Verbundfolie 32 selbst nicht verändert. Zur Bildung des Öffnungsabschnittes 14 sind bei dieser Ausführungsform entweder (Fig. 5a) zwei vollständig getrennte und parallel zueinander in einem geringen Abstand verlaufende Verstärkungsstreifen 16, 17' vorgesehen, die alternativ (Fig. 5a, Figuren 6 bis 8) aber auch über durchtrennbare Materialbrücken 17 miteinander verbunden sein können. Die Verstärkungsabschnitte 16, 16' können entweder parallel zur Verschlußnaht 11 (Fig. 5a) oder aber senkrecht zu ihr (Fig. 5b) angeordnet sein. In beiden Fällen ist es von Vorteil, wenn jeweils am Rand des Verschlußabschnittes 15 eine Kerbe 21 in diesem vorgesehen ist, welche das Einreißen erleichtert und den Riß auf die Mitte zwischen den beiden Verstärkungsabschnitten 16, 16' leitet. Die Kerbe 21 ist selbstverständlich nur so tief in den Verschlußabschnitt 15 hinein gerichtet, daß die Dichtigkeit der Anordnung (durch die Verschlußnaht 11 bzw. die Teilnaht 12') gewährleistet ist.

Während die in Fig. 5a gezeigte Anordnung beim Öffnen sicherstellt, daß der entstehende Riß nicht bis zum Packungsinhalt führt, hat die in Fig. 5b gezeigte Anordnung den Vorteil, daß eine Folienbahn 32 (siehe Fig. 6) entweder bei der Fertigung oder direkt vor bzw. während der Bildung des Folienschlauches mit einem durchlaufenden Verstärkungsabschnitt 16, 16' kontinuierlich versehen werden kann.

Von besonderem Vorteil ist es, wenn der Verstärkungsabschnitt 16, 16' wie in den Figuren 7 und 8 gezeigt, nur über Reihen von punktförmigen Verbindungsstellen 39 mit der Verbundfolie 32 verbunden ist, so daß zwischen den Verbindungsstellen 39 Unterbrechungen 40 der Verbindung bestehen bleiben. Die Verbindungsstellen 39 können entweder Klebestellen oder aber Schweißstellen sein. Durch diese besondere Form der Verbindung wird gegenüber durchgeführten Verbindungslinien gewährleistet, daß sich das Material der Verpackungsverbundfolie 32 am Rand des bzw. am Übergang zum Verstärkungsabschnitt 16, 16' nicht wirft, was während des Herstellungsvorganges der Verpackungen zu Schwierigkeiten führen kann.

Die Anordnung des Verstärkungsabschnittes 16, 16' kann selbstverständlich auch so sein, daß parallel zur Folienbahn verlaufende Verstärkungsabschnitte (Fig. 5b, Fig. 6) nur stückweise vorgesehen sind, also nicht über die gesamte Packungslänge verlaufen. Das Material, aus welchem die Verstärkungsabschnitte 16, 16' bestehen, kann ebenfalls eine Verbundfolie 22 (Fig. 8) sein, wie die Verpackungsverbundfolie 32.

Bei der in den Figuren 9 bis 14 gezeigten weiteren bevorzugten Ausführungsform der Erfindung umfaßt der Öffnungsabschnitt 14 linienförmige Schwächungsabschnitte 27, in denen das Material der Verbundfolie 32 in seiner Reißfestigkeit geschwächt ist. In den Figuren 12 und 13 sind diese Schwächungen 27 gemäß einer Ausführungsform der Erfindung als Kerben gezeichnet, in deren Bereich die auf der Aluminiumschicht 24 liegenden Kunststoffschichten 23 und 25 z.B. durch Erwärmen mittels eines Laserstrahles dünner sind als im übrigen Bereich der Verpackungsverbundfolie 32. Es sei hier aber ausdrücklich darauf verwiesen, daß die Veränderung der Reißfestigkeit in einem linienförmigen Bereich nicht nur durch makroskopische Veränderungen (Kerbe), sondern auch durch Änderungen im inneren Aufbau des Materials, z.B. durch Änderungen im Polymerisationsgrad des Materials herstellbar sind.

Wenn man die linienförmige Schwächung 27 bis an den Rand der Folie 32 (bei deren Herstellung oder kurz vor bzw. während der Bildung des Folienschlauches) führt und zwar nur auf einer Seite, so entsteht die in den Figuren 9 und 13 gezeigte Ausführungsform. Wenn man eine Folienbahn 32 mit Schwächungen 27 wie in Fig. 10 gezeigt versieht, so entsteht die in den Figuren 9 und 12 gezeigte Ausführungsform.

Bei der in Fig. 9b gezeigten Ausführungsform ist wie oben bereits anhand eines anderen Ausführungsbeispieles erläutert, eine Kerbe 21 im Bereich der seitlich verlaufenden Teilnaht 12 vorgesehen, die auf die Schwächung 27 gerichtet ist. Bei der in Fig. 9a gezeigten Ausführungsform ist die Teilnaht 12' so kurz, daß sie nicht bis zur Schwächung 27 reicht. Selbstverständlich sind aber die beiden Möglichkeiten untereinander austauschbar.

Bei der in Fig. 14 gezeigten weiteren bevorzugten Ausführungsform der Erfindung sind zwei parallel zueinander verlaufende Schwächungen 27 vorgesehen, die somit einen Streifen definieren. Dieser Streifen ist vorzugsweise an seinem Ende mit einer Grifflasche 19 versehen, die bei der in Fig. 14a gezeigten Ausführungsform mit senkrecht zur Verschlußnaht 11 verlaufendem Öffnungsabschnitt 14 durch zwei entsprechende Kerben 21 definiert ist.

Bei der in Fig. 14b gezeigten Ausführungsform der Erfindung ist die Grifflasche 19 durch eine U-förmige Stanzung 26 definiert, die in einem Siegelbereich 18 ausgeführt ist, in welchem die beiden innenliegenden Schichten 23 der Verpackungsverbundfolie 32 miteinander verschweißt sind, so daß auch im Bereich der U-Stanzung 26 keine Luft in die Packung eindringen kann. Die Schenkel der Stanzung 26 grenzen an die Enden der zwei Schwächungen 27 bzw. gehen in diese über. Wenn man bei der in Fig. 14 gezeigten Ausführungsform der Erfindung an der Grifflasche 19 zieht, so kann man also einen Streifen aus der Verpackungsverbundfolie 32 herausreißen, um so eine Öffnung zum Ausschütten des Packungsinhaltes freizugeben.

Wie aus obigem hervorgeht, lassen sich die soeben beschriebenen Merkmale der Erfindung, insbesondere die in Zusammenhang mit den Figuren 5 bis 8 bzw. 9 bis 14 beschriebenen Merkmale miteinander kombinieren, wobei insbesondere im Bereich zwischen den Verstärkungsabschnitten 16, 16' (Figuren 5 bis 8) Schwächungen 27 (Figuren 10 bis 14) vorgesehen sein können, was die zum Öffnen der Packung notwendige Kraft weiter verringert.

**Ansprüche**

1. Verpackung aus mehrschichtiger Verbundfolie, die mittels Längsnaht zu einem Folienschlauch geformt ist und die mindestens eine (obere) quergerichtete Verschlußnaht aufweist, wobei Öffnungsmittel benachbart zur Verschlußnaht angeordnet sind, **dadurch gekennzeichnet,** daß die Öffnungsmittel mindestens einen im wesentlichen linienförmigen Öffnungsabschnitt (14) umfassen, in dessen Bereich die Verbundfolie (32) relativ zu den an diesen Abschnitt (14) angrenzenden Flächenbereichen zum gerichteten Öffnen geschwächt ist.

2. Verpackung nach Anspruch 1, dadurch gekennzeichnet, daß im wesentlichen direkt angrenzend an den und parallel zum Öffnungsabschnitt (14) auf der Verbundfolie (32) Verstärkungsabschnitte (16, 16') aus Materialstreifen angeordnet sind.

3. Verpackung nach Anspruch 2, dadurch gekennzeichnet, daß die streifenförmigen Verstärkungsabschnitte (16, 16') über quergerichtete Materialbrücken (17) miteinander verbunden sind.

4. Verpackung nach einem der Ansprüche 2 oder 3, dadurch gekennzeichnet, daß die Verstärkungsabschnitte (16, 16') auf der Außenseite der Verbundfolie (32) aufgebracht sind, insbesondere durch (punktförmiges) Siegeln oder Kleben und daß einer zwischen den Verstärkungsabschnitten (16, 16') verlaufenden Reißlinie eine Stanzung (Kerbe 21) zugeordnet ist.

5. Verpackung nach einem der vorhergehenden Ansprüche, wobei die Verbundfolie (32) eine Metall-, vorzugsweise eine Aluminiumschicht (24) zwischen zwei Kunststoffschichten (23, 25) aufweist, dadurch gekennzeichnet, daß die Verbundfolie im Bereich des Öffnungsabschnitts (14) mit einer Materialschwächung (27) der außen- und/oder der innenliegenden Kunststoffschicht (23, 25) versehen ist.

6. Verpackung nach Anspruch 5, dadurch gekennzeichnet, daß die Materialschwächung (14) durch eine linienförmige Erhitzung mittels eines Laserstrahls ($CO_2$-Laser) ohne Beeinflussung der Aluminiumschicht (24) gebildet ist.

7. Verpackung nach Anspruch 1, dadurch gekennzeichnet, daß die Verbundfolie (32) im Öffnungsabschnitt (14) vollständig durchtrennt (Schnitt 28) ist, und daß auf die Verbundfolie (32), den Öffnungsabschnitt (14) vollständig überdeckend, ein abziehbarer Verschlußstreifen (Peel-Etikett 29) dicht aufgebracht ist.

8. Verpackung nach Anspruch 7, dadurch gekennzeichnet, daß der Öffnungsabschnitt (14) sich über einen wesentlichen Teil der Breite der Packung erstreckt.

9. Verfahren zum Herstellen einer Verpackung aus Verbundfolie nach einem der vorhergehenden Ansprüche, dadurch gekennzeichnet, daß man mindestens eine Oberfläche der Verbundfolie im Bereich des Öffnungsabschnittes mittels elektromagnetischer Strahlung, insbesondere mittels eines Laserstrahls, in ihrer Dicke und/oder in ihrer inneren Struktur (Polymerisationsgrad) linienförmig hinsichtlich ihrer Reißfertigkeit geschwächt wird.

10. Verfahren nach Anspruch 9, dadurch gekennzeichnet, daß man die Wellenlänge der elektromagnetischen Strahlung bzw. der Laserstrahlung derart auf das Material der Metallschicht und/oder der zu behandelnden Kunststoffschicht abstimmt, daß ein wesentlicher Anteil der Strahlung von der Metallschicht reflektiert und von der Kunststoffschicht absorbiert wird.

11. Verfahren nach Anspruch 9, dadurch gekennzeichnet, daß durch kontrollierte Energie-Zufuhr eines Lasers die Eindringtiefe des Laserstrahls in die Verbundfolie derart geregelt wird, daß eine linienförmige Materialschwächung der Verbundfolie bewirkt wird, die innenliegende, dichte Schichten (z. B. Aluminiumschicht) unzerstört läßt.

Fig. 1

Fig. 2

# Fig. 3

# Fig. 4

## Fig. 5

## Fig. 8

## Fig. 7

## Fig. 6

**a**

**b**

13

11

12'

12

21

27

14

27

10

25 24 23 11

25

24

27

**Fig. 12**

27

32

**Fig. 10**

**Fig. 9**

**a**

**b**

12

21

13

11

14

12

26

19

27

14

27

18

19

24 24

11

27

31

25 23 25

32

10

27

32

**Fig. 13**

**Fig. 14**

**Fig. 11**